# EUROPEAN PATENT APPLICATION

(11) **EP 4 527 811 A1**
(43) Date of publication of application: **26.03.2025**
(21) Application number: 22926670.5
(22) Date of filing: 30.06.2022
(51) Int. Cl.: C03C 17/36, B32B 17/00, B32B 17/06, C03C 27/12

(54) **LAMINATED WINDOW GLASS**

(71) Applicant: Fuyao Glass Industry Group Co., Ltd., Fuqing, Fujian 350300 (CN)
(72) Inventor: TSO, Fai, Fuqing, Fujian 350300 (CN); HUANG, Fengzhu, Fuqing, Fujian 350300 (CN); ZENG, Dong, Fuqing, Fujian 350300 (CN); CHEN, Guofu, Fuqing, Fujian 350300 (CN); ZHU, Rui, Fuqing, Fujian 350300 (CN); FUKUHARA, Kohta, Fuqing, Fujian 350300 (CN)
(74) Representative: Mewburn Ellis LLP
(86) International application number: PCT/CN2022/102588
(87) International publication number: WO 2023/155362

(57) **Abstract**

Laminated window glass is provided in the present disclosure. The laminated window glass includes outer glass, an adhesive layer, inner glass, and a first infrared barrier layer. The outer glass has a first surface and a second surface opposite to the first surface. The inner glass has a third surface and a fourth surface opposite to the third surface. The adhesive layer is disposed between the second surface and the third surface, and the first infrared barrier layer is disposed on the fourth surface. An inner-side visible-light reflectivity of the laminated window glass is less than or equal to 16% for visible light with an incident angle ranging from 0° to 70°. The laminated window glass has a relatively good heat insulation effect, a relatively low visible-light transmittance, and a relatively low visible-light reflectivity that is measured in a vehicle, so that obvious reflected images of passengers and objects in the vehicle are prevented from forming on sunroof glass, and thus comfort of vehicle ride is improved.

## Description

### TECHNICAL FIELD

The disclosure relates to the technical field of glass products, in particular to laminated window glass mounted on a vehicle.

### BACKGROUND

With the growing market demand for new energy vehicles, a height space in the vehicle is shortened due to the mounting of power battery components on a chassis of the new energy vehicle, and more and more automobile manufacturers hope to achieve a larger height space in the vehicle by removing a sunshade curtain configured on the conventional sunroof glass. With the removal of the sunshade curtain, sunlight can enter the interior of the vehicle directly through the sunroof glass, especially in the case of panoramic canopy glass or panoramic sunroof glass, which may cause excessive brightness in the vehicle, so that vision of passengers may be interfered and comfort of vehicle ride may be reduced, and moreover, regulation of temperature in the vehicle requires more energy in both summer and winter. In order to overcome the above problems, sunroof glass with a low visible-light transmittance and a heat insulation performance is usually used in the related art, such as sunroof glass with a visible-light transmittance less than or equal to 16%. However, after the sunroof glass is mounted on the vehicle, the sunroof glass has a relatively low visible-light transmittance and a relatively high visible-light reflectivity that is measured in the vehicle, so that obvious reflected images of passengers and objects in the vehicle may be easily formed on the sunroof glass due to specular reflection, resulting in great visual interference to the passengers, especially rear passengers.

### SUMMARY

The present disclosure aims to provide laminated window glass. The laminated window glass has a relatively good heat insulation effect, a relatively low visible-light transmittance, and a relatively low visible-light reflectivity that is measured in a vehicle, so that obvious reflected images of passengers and objects in the vehicle are prevented from forming on sunroof glass, and thus comfort of vehicle ride is improved.

Laminated window glass is provided in the present disclosure. The laminated window glass includes outer glass, an adhesive layer, inner glass, and a first infrared barrier layer. The outer glass has a first surface and a second surface opposite to the first surface. The inner glass has a third surface and a fourth surface opposite to the third surface. The adhesive layer is disposed between the second surface and the third surface, and the first infrared barrier layer is disposed on the fourth surface. An inner-side visible-light reflectivity of the laminated window glass is less than or equal to 16% for visible light with an incident angle θ satisfying 60° < θ ≤ 70°.

The inner-side visible-light reflectivity of the laminated window glass is less than or equal to 8% for the visible light with the incident angle θ satisfying 40° < θ ≤ 60°.

The inner-side visible-light reflectivity of the laminated window glass is less than or equal to 4% for the visible light with the incident angle θ satisfying 0° ≤ θ ≤ 40°.

The laminated window glass has a visible-light transmittance less than or equal to 16%, the outer glass has a visible-light transmittance greater than or equal to 70%, and the inner glass has a visible-light transmittance ranging from 10% to 50%.

The adhesive layer is a thermoplastic polymer layer with a visible-light transmittance greater than or equal to 70%.

The first infrared barrier layer includes a transparent conductive oxide (TCO) layer, a first absorption layer, and a first low-refractive-index layer laminated in sequence on the fourth surface. The first low-refractive-index layer has a refractive index less than 1.9.

The TCO layer is made of at least one of indium tin oxide (ITO), nickel chromium oxide (NiCrOₓ), fluorine-doped tin oxide (FTO), zinc tin oxide (ZnSnOₓ), or doped zinc oxide (ZnO), and a doping element in the doped ZnO may be at least one of: aluminum (Al), tungsten (W), hafnium (Hf), gallium (Ga), yttrium (Y), niobium (Nb), or neodymium (Nd).

The first absorption layer is made of at least one of nickel chromium (NiCr), nickel aluminum (NiAl), nickel silicon (NiSi), chromium (Cr), titanium nitrogen (TiN), niobium nitrogen (NbN), or molybdenum titanium (MoTi).

The TCO layer has a thickness ranging from 50 nm to 300 nm, the first absorption layer has a thickness ranging from 2 nm to 30 nm, and the first low-refractive-index layer has a thickness ranging from 10 nm to 300 nm.

The first absorption layer is in direct contact with the TCO layer, and the first low-refractive-index layer is in direct contact with the first absorption layer.

The first infrared barrier layer further includes a second absorption layer and a second low-refractive-index layer, the second absorption layer is disposed between the first low-refractive-index layer and the second low-refractive-index layer, and the second low-refractive-index layer is disposed farther away from the fourth surface than the first low-refractive-index layer.

The first infrared barrier layer further includes at least one laminated structure, the at least one laminated structure is disposed between the fourth surface and the TCO layer, each of the at least one laminated structure includes a lower high-refractive-index layer and a lower low-refractive-index layer, the lower high-refractive-index layer is closer to the fourth surface than the lower low-refractive-index layer, the lower high-refractive-index layer has a refractive index greater than or equal to 1.9, and the lower low-refractive-index layer has a refractive index less than 1.9.

The first infrared barrier layer further includes an outermost high-refractive-index layer, the outermost high-refractive-index layer is a farthest layer of the first infrared barrier layer away from the fourth surface, the outermost high-refractive-index layer has a refractive index greater than or equal to 1.9, and the outermost high-refractive-index layer has a thickness ranging from 5 nm to 50 nm.

A thickness of the first low-refractive-index layer or a thickness of the second low-refractive-index layer is larger than the thickness of the outermost high-refractive-index layer.

The laminated window glass has an emissivity that is measured from the inner glass and ranges from 0.35 to 0.5.

The laminated window glass has an emissivity that is measured from the inner glass and is less than 0.35.

The laminated window glass further includes a second infrared barrier layer. The second infrared barrier layer is disposed between the outer glass and the inner glass. The second infrared barrier layer includes at least one metal layer and at least two dielectric layers. Each of the at least one metal layer is disposed between two adjacent dielectric layers of the at least two dielectric layers. A metal layer is made of a group consisting of a metal or metal alloy of at least one of argentum (Ag), aurum (Au), cuprum (Cu), Al, or platinum (Pt).

The second infrared barrier layer further includes at least one NiCr absorption layer, and each of the at least one NiCr absorption layer has a thickness greater than or equal to 3 nm.

The laminated window glass has a transmittance index A greater than 8, and the transmittance index *A* is calculated according to a formula *A*=*TL*/(*TE***TL1*), where *TL* represents a visible-light transmittance of the laminated window glass, *TE* represents a solar direct transmittance of the laminated window glass, and *TL1* represents a total visible-light transmittance of the inner glass and the first infrared barrier layer.

The transmission index A of the laminated window glass is greater than or equal to 10.

The present disclosure provides laminated window glass that can meet comprehensive requirements such as a good heat insulation effect, a low radiation effect, a low visible-light transmittance, and a relatively low visible-light reflectivity for light in the vehicle incident at an incident angle ranging from 0° to 70°, and thus both a low-angle anti-reflection effect and a medium-high angle anti-reflection effect are relatively good. Therefore, reflected images of passengers and objects in the vehicle formed on the laminated window glass due to specular reflection are not obvious, and thus visual interference in the passengers, especially rear passengers, can be attenuated or even eliminated, thereby improving thermal comfort, brightness comfort, and visual comfort in the vehicle.

### BRIEF DESCRIPTION OF THE DRAWINGS

FIG. 1 is a schematic structural view of a vehicle mounted with laminated window glass in embodiments of the present disclosure.
FIG. 2 is a schematic cross-sectional structural view of laminated window glass in a first embodiment of the present disclosure, taken in a thickness direction.
FIG. 3 is a schematic structural view of a first infrared barrier layer in the laminated window glass in FIG. 2 in a first example.
FIG. 4 is a schematic structural view of a first infrared barrier layer in the laminated window glass in FIG. 2 in a second example.
FIG. 5 is a schematic structural view of a first infrared barrier layer in the laminated window glass in FIG. 2 in a third example.
FIG. 6 is a schematic structural view of a first infrared barrier layer in the laminated window glass in FIG. 2 in a fourth example.
FIG. 7 is a schematic cross-sectional structural view of laminated window glass in a second embodiment of the present disclosure, taken in a thickness direction.

### DETAILED DESCRIPTION

The following will further describe contents of the present disclosure with reference to accompanying drawings.

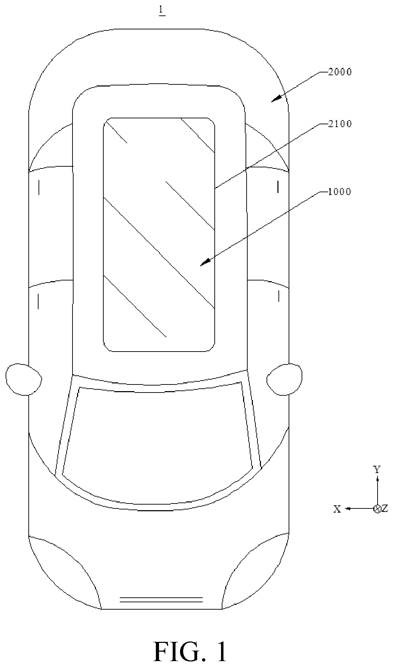

Refer to FIG. 1, where FIG. 1 is a schematic structural view of a vehicle 1 mounted with laminated window glass 1000 in embodiments of the present disclosure.

The vehicle 1 includes laminated window glass 1000 and a vehicle body 2000. The vehicle body 2000 defines a vehicle-body opening 2100. The laminated window glass 1000 is mounted in the vehicle-body opening 2100 and used as sunroof glass. The laminated window glass 1000 may be used as a side window glass or sunroof glass. In embodiments of the present disclosure, the laminated window glass 1000 is used as sunroof glass.

For convenience of description, a length direction of the laminated window glass 1000 illustrated in FIG. 1 is used as an X-axis direction, a width direction of the laminated window glass 1000 illustrated in FIG. 1 is used as a Y-axis direction, and a thickness direction of the laminated window glass 1000 illustrated in FIG. 1 is used as a Z-axis direction, where a positive Z-axis direction is a direction pointing from the exterior of the vehicle 1 to the interior of the vehicle 1.

After the laminated window glass 1000 provided in embodiments of the present disclosure is mounted in the vehicle-body opening 2100, transmission of infrared rays, ultraviolet rays, visible light, and other rays into the interior of the vehicle 1 can be reduced, and thus the laminated window glass 1000 has a relatively good heat insulation effect and a relatively low visible-light transmittance, thereby improving thermal comfort and brightness comfort in the vehicle. Furthermore, with the aid of the laminated window glass 1000, heat radiation from the exterior of the vehicle into the interior of the vehicle 1 can be reduced in summer, and heat dissipation from the interior of the vehicle into the exterior of the vehicle 1 can be reduced in winter, thereby meeting requirements of energy conservation and environmental protection. In addition, the visible-light reflectivity of the laminated window glass 1000 measured in the vehicle is relatively low, so that reflected images of passengers and objects in the vehicle formed on the sunroof glass due to specular reflection are not obvious, and thus visual interference in the passengers, especially rear passengers, can be attenuated or even eliminated, thereby improving the visual comfort in the vehicle.

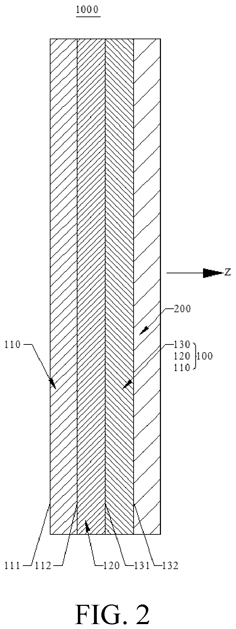

Refer to FIG. 2, where FIG. 2 is a schematic cross-sectional structural view of laminated window glass in a first embodiment of the present disclosure, taken in a thickness direction.

The laminated window glass 1000 includes laminated glass 100 and a first infrared barrier layer 200. The laminated glass 100 includes outer glass 110, an adhesive layer 120, and inner glass 130. The adhesive layer 120 is disposed between the outer glass 110 and the inner glass 130. The outer glass 110 has a first surface 111 and a second surface 112 opposite to the first surface 111. The first surface 111 faces the exterior of the vehicle 1. The second surface 112 is adjacent to the adhesive layer 120. The inner glass 130 has a third surface 131 and a fourth surface 132 opposite to the third surface 131. The third surface 131 is adjacent to the adhesive layer 120. The fourth surface 132 faces the interior of the vehicle 1. The first infrared barrier layer 200 is disposed on the fourth surface 132. In the positive Z-axis direction, light from the exterior of the vehicle enters the interior of the vehicle through the outer glass 110, the adhesive layer 120, the inner glass 130, and the first infrared barrier layer 200 in sequence.

In this embodiment, the outer glass 110 has a visible-light transmittance greater than or equal to 70%, and the inner glass 130 has a visible-light transmittance ranging from 10% to 50%. Specifically, the inner glass 130 may be made of tinted glass such as green glass, gray glass, blue glass, and tawny glass. When tinted glass is used as the inner glass 130, by providing the first infrared barrier layer 200 on the fourth surface 132 of the inner glass 130, it is possible to make the laminated window glass 1000 have a relatively low visible-light transmittance. Therefore, requirements on privacy, shading, or the like can be met, heat radiation from the exterior of the vehicle into the interior of the vehicle 1 can be reduced in summer, and heat dissipation from the interior of the vehicle into the exterior of the vehicle 1 can be reduced in winter.

The adhesive layer 120 is a thermoplastic polymer layer with a visible-light transmittance greater than or equal to 70% and is used to adhere the outer glass 110 and the inner glass 130 to form a laminated structure. The adhesive layer 120 may be made of polyvinyl butyral (PVB), an ionic interlayer (SGP), ethylene vinyl acetate copolymer (EVA), polyurethane (PU), etc., preferably transparent PVB. In the present disclosure, use of a thermoplastic polymer layer with a visible-light transmittance greater than or equal to 70% may achieve that a visible-light transmittance of the laminated window glass 1000 is less than or equal to 16%, preferably less than or equal to 12%, more preferably less than or equal to 10%, or even from 1% to 5%, and thus there is no need to use a thermoplastic polymer layer in a dark color at a higher price, thereby reducing production costs. It may be understood that a thermoplastic polymer layer with a visible-light transmittance less than 70%, such as a gray PVB, may also be used in the present disclosure to provide more product portfolios.

When the laminated window glass 1000 provided in embodiments of the present disclosure is used as sunroof glass, with the aid of the first infrared barrier layer 200 disposed on the fourth surface 132, an emissivity of the laminated window glass 1000 measured in the vehicle can be reduced, a total solar energy transmittance *Tts* of the laminated window glass 1000 can be further reduced, and moreover, the visible-light reflectivity of the laminated window glass 1000 measured in the vehicle can be reduced. Therefore, the laminated window glass 1000 has a relatively low visible-light reflectivity over a relatively wide range of incident angles, thereby improving a high-angle anti-reflection effect on the light in the vehicle. Moreover, rear passengers can barely observe obvious reflected images on the sunroof glass, and visual interferences can be attenuated or even eliminated, thereby improving the visual comfort in the vehicle.

It may be ensured that a low-angle anti-reflection effect can be realized with the laminated window glass 1000 provided in embodiments of the present disclosure. When visible light is incident on the laminated window glass 1000 provided in embodiments of the present disclosure at an incident angle θ satisfying 0°≤ θ ≤ 40°, an inner-side visible-light reflectivity of the laminated window glass 1000 is less than or equal to 4%. A medium-high-angle anti-reflection effect can be realized with the laminated window glass 1000 provided in embodiments of the present disclosure. The laminated window glass 1000 has an inner-side visible-light reflectivity less than or equal to 8% for visible light incident at an incident angle θ satisfying 40° < θ ≤ 60°. Furthermore, the laminated window glass 1000 has an inner-side visible-light reflectivity less than or equal to 16% for visible light incident at an incident angle θ satisfying 60° < θ ≤ 70°. The inner-side visible-light reflectivity refers to a visible-light reflectivity for visible light in the vehicle incident on the laminated window glass 1000.

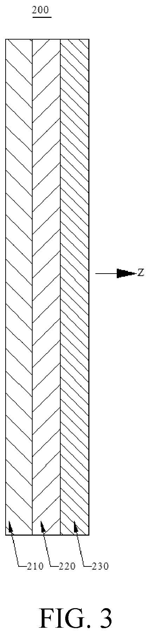

Refer to FIG. 3, where FIG. 3 is a schematic structural view of a first infrared barrier layer 200 in the laminated window glass 1000 in FIG. 2 in a first example.

In the positive Z-axis direction, i.e., in a direction from the outer glass 110 towards the inner glass 130, the first infrared barrier layer 200 includes a transparent conductive oxide (TCO) layer 210, a first absorption layer 220, and a first low-refractive-index layer 230 laminated in sequence on the fourth surface 132. In this embodiment, the TCO layer 210 is in direct contact with the fourth surface 132 of the inner glass 130. The first absorption layer 220 is in direct contact with the TCO layer 210. The first low-refractive-index layer 230 is in direct contact with the first absorption layer 220.

An emissivity of ordinary laminated glass is usually about 0.9. The TCO layer 210 serves to reduce an emissivity of the laminated window glass 1000. The emissivity of the laminated window glass 1000 is less than or equal to 0.5 when measured in the vehicle, i.e., from the inner glass 130. In some specific embodiments, the TCO layer 210 is made of at least one of indium tin oxide (ITO), nickel chromium oxide (NiCrOₓ), fluorine-doped tin oxide (FTO), zinc tin oxide (ZnSnOₓ), or doped zinc oxide (ZnO). A doping element in the doped ZnO may be at least one of aluminum (Al), tungsten (W), hafnium (Hf), gallium (Ga), yttrium (Y), niobium (Nb), or neodymium (Nd), where the doped ZnO may be exemplified by aluminum-doped zinc oxide (AZO) and hafnium- and aluminum-doped AZO (HAZO). In some embodiments, the TCO layer 210 has a thickness ranging from 50 nm to 300 nm. In other embodiments, the TCO layer 210 has a thickness ranging from 60 nm to 280 nm. The TCO layer 210 may include a single layer, such as only one ITO layer, or may be implemented as multiple layers, where "multiple layers" mean two or more layers, and materials of adjacent layers are different. For example, the TCO layer 210 includes sequentially laminated ZnSnOₓ layer/ITO layer, the TCO layer 210 includes sequentially laminated ITO layer/HAZO layer, or the TCO layer 210 includes sequentially laminated ZnSnOₓ layer/ITO layer/HAZO layer. In some specific embodiments, the emissivity of the laminated window glass 1000 measured in the vehicle, i.e., measured from the inner glass 130, ranges from 0.35 to 0.5, thereby realizing more convenient and less costly manufacturing. Specifically, the emissivity of the laminated window glass 1000 may be 0.36, 0.41, 0.45, 0.47, etc. In some specific embodiments, the emissivity of the laminated window glass 1000 measured in the vehicle, i.e., measured from the inner glass 130, is less than 0.35, more preferably less than or equal to 0.3, or even less than or equal to 0.25, thereby realizing a better heat-insulation and heat-preservation effect. Specifically, the emissivity of the laminated window glass 1000 may be 0.11, 0.15, 0.16, 0.17, 0.22, 0.23, etc.

The first absorption layer 220 serves to further reduce the emissivity of the laminated window glass 1000 on the one hand, and serves to reduce the visible-light transmittance and visible-light reflectivity of the laminated window glass 1000 on the other hand. In some specific embodiments, the first absorption layer 220 may be made of at least one of nickel chromium (NiCr), nickel aluminum (NiAl), nickel silicon (NiSi), chromium (Cr), titanium nitrogen (TiN), niobium nitrogen (NbN), or molybdenum titanium (MoTi). In some embodiments, the first absorption layer 220 has a thickness ranging from 2 nm to 30 nm. In other embodiments, the thickness of the first absorption layer 220 ranges from 3 nm to 20 nm. Specifically, the thickness of the first absorption layer 220 may be 3.5 nm, 4 nm, 5 nm, 6 nm, 7 nm, 8 nm, 9 nm, 10 nm, 11 nm, 15 nm, 18 nm, etc.

The first low-refractive-index layer 230 has a refractive index less than 1.9, and the first low-refractive-index layer 230 is in direct contact with the first absorption layer 220. The first low-refractive-index layer 230 serves to adjust an optical color of the laminated window glass 1000 and serves to reduce a visible-light reflectivity of the laminated window glass 1000 for light in the vehicle incident at a high angle. In some specific embodiments, the first low-refractive-index layer 230 is made of a group consisting of an oxide of one or more of Al, magnesium (Mg), Zn, Si, zirconium (Zr), stannum (Sn), calcium (Ca), vanadium (V), etc. In some embodiments, the first low-refractive-index layer 230 has a thickness ranging from 10 nm to 300 nm. In other embodiments, the first low-refractive-index layer 230 has a thickness ranging from 20 nm to 280 nm. It may be understood that the first low-refractive-index layer 230 may include a single layer or multiple layers. For example, the first low-refractive-index layer 230 includes SiO₂ layer/SiAlOₓ layer.

In embodiments of the present disclosure, by laminating sequentially the TCO layer 210, the first absorption layer 220, and the first low-refractive-index layer 230 to form the first infrared barrier layer 200, on the one hand, the emissivity of the laminated window glass 1000 can be reduced, and on the other hand, the laminated window glass 1000 has a relatively low visible-light reflectivity for light in the vehicle over a relatively wide range of incident angles, thereby realizing a high-angle anti-reflection effect for the light in the vehicle, and avoiding visual interference brought by specular reflection of people and objects in the vehicle.

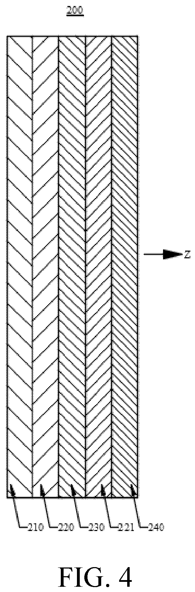

Refer to FIG. 4, where FIG. 4 is a schematic structural view of a first infrared barrier layer 200 in the laminated window glass 1000 in FIG. 2 in a second example.

Unlike the first infrared barrier layer 200 in the first example, the first infrared barrier layer 200 in this example further includes a second absorption layer 221 and a second low-refractive-index layer 240. The second absorption layer 221 is disposed between the first low-refractive-index layer 230 and the second low-refractive-index layer 240. The second low-refractive-index layer 240 is farther away from the fourth surface 132 than the first low-refractive-index layer 230. That is, the first infrared barrier layer 200 in the second example includes the TCO layer 210, the first absorption layer 220, the first low-refractive-index layer 230, the second absorption layer 221, and the second low-refractive-index layer 240 laminated in sequence on the fourth surface 132. In some embodiments, the second absorption layer 221 has a thickness ranging from 2 nm to 30 nm. In some specific embodiments, the second absorption layer 221 may be made of at least one of NiCr, NiAl, NiSi, Cr, TiN, NbN, or MoTi.

The second low-refractive-index layer 240 has a refractive index less than 1.9. In some specific embodiments, the second low-refractive-index layer 240 is made of a group consisting of an oxide of one or more of Al, Mg, Zn, Si, Zr, Sn, Ca, V, etc. In some embodiments, the second low-refractive-index layer 240 has a thickness ranging from 10 nm to 300 nm. In other embodiments, the second low-refractive-index layer 240 has a thickness ranging from 20 nm to 280 nm. It may be understood that the second low-refractive-index layer 240 may include a single layer or multiple layers.

In other examples, the first infrared barrier layer 200 may further include more absorption layers, such as a third absorption layer, a fourth absorption layer, etc. The first infrared barrier layer 200 including the third absorption layer may specifically include, for example, the TCO layer 210, the first absorption layer 220, the first low-refractive-index layer 230, the second absorption layer 221, the second low-refractive-index layer 240, the third absorption layer, and the third low refractive-index layer laminated in sequence on the fourth surface 132. The first infrared barrier layer 200 including the fourth absorption layer may specifically include, for example, the TCO layer 210, the first absorption layer 220, the first low-refractive-index layer 230, the second absorption layer 221, the second low-refractive-index layer 240, the third absorption layer, the third low-refractive-index layer, the fourth absorption layer, and the fourth low-refractive-index layer laminated in sequence on the fourth surface 132.

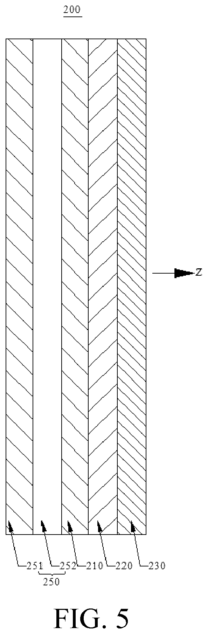

Refer to FIG. 5, where FIG. 5 is a schematic structural view of a first infrared barrier layer 200 in the laminated window glass 1000 in FIG. 2 in a third example.

Unlike the first infrared barrier layer 200 in the first example, the first infrared barrier layer 200 in this example further includes a laminated structure 250. The laminated structure 250 is disposed between the inner glass 130 and the TCO layer 210. It may be understood that the laminated structure 250 may also be additionally provided in the first infrared barrier layer 200 in other examples.

In the positive Z-axis direction, the laminated structure 250 includes a lower high-refractive-index layer 251 and a lower low-refractive-index layer 252 laminated in sequence. The lower high-refractive-index layer 251 is directly disposed on the fourth surface 132, and the lower low-refractive-index layer 252 is disposed between the lower high-refractive-index layer 251 and the TCO layer 210. That is, the first infrared barrier layer 200 in the third example includes the lower high-refractive-index layer 251, the lower low-refractive-index layer 252, the TCO layer 210, the first absorption layer 220, and the first low-refractive-index layer 230 laminated in sequence on the fourth surface 132. By providing the laminated structure 250, diffusion of alkali metal ions from the inner glass 130 into the first infrared barrier layer 200 can be reduced or prevented, and thus the alkali metal ions can be prevented from impairing performance of the first infrared barrier layer 200. Meanwhile, with the cooperation of the lower high-refractive-index layer 251 and the lower low-refractive-index layer 252, the laminated structure 250 is further conducive to adjusting the optical effect of the first infrared barrier layer 200, such as appropriately increasing the visible-light transmittance and further decreasing the visible-light reflectivity of the laminated window glass 1000 for light in the vehicle incident at a high angle, which is more conducive to avoiding visual interference brought by specular reflection of people and objects in the vehicle.

The laminated structure 250 may also be additionally provided in the first infrared barrier layer 200 in other examples. Specifically, for example, the first infrared barrier layer 200 includes a lower high-refractive-index layer 251, a lower low-refractive-index layer 252, a TCO layer 210, a first absorption layer 220, a first low-refractive-index layer 230, a second absorption layer 221, and a second low-refractive-index layer 240 laminated in sequence on the fourth surface 132.

The laminated structure 250 is implemented as at least one laminated structure 250. For example, in FIG. 5, there is one laminated structure 250. That is, the laminated structure 250 includes the lower high-refractive-index layer 251/the lower low-refractive-index layer 252. In other embodiments, the number of laminated structures 250 may be two, three, five, etc. For example, when the number is two, the laminated structures 250 include the lower high-refractive-index layer 251/the lower low-refractive-index layer 252/the lower high-refractive-index layer 251/the lower low-refractive-index layer 252.

The lower high-refractive-index layer 251 has a refractive index greater than or equal to 1.9. In some specific embodiments, the lower high-refractive-index layer 251 is made of a group consisting of a nitride, an oxide, and a nitrogen oxide of at least one of Zn, Sn, Ti, Si, Al, Ni, Cr, Nb, Mg, Zr, Ga, Y, indium (In), antimony (Sb), V, or tantalum (Ta). In some embodiments, a thickness of the lower high-refractive-index layer 251 ranges from 10 nm to 150 nm, and in other embodiments, the thickness ranges from 20 nm to 120 nm. The lower low-refractive-index layer 252 has a refractive index less than 1.9. In some specific embodiments, the lower low-refractive-index layer 252 is made of a group consisting of an oxide of one or more of Al, Mg, Zn, Si, Zr, Sn, Ca, V, etc. In some embodiments, a thickness of the lower low-refractive-index layer 252 ranges from 10 nm to 150 nm. In other embodiments, the thickness of the lower low-refractive-index layer 252 ranges from 20 nm to 130 nm. It may be understood that the lower low-refractive-index layer 252 may include a single layer or multiple layers.

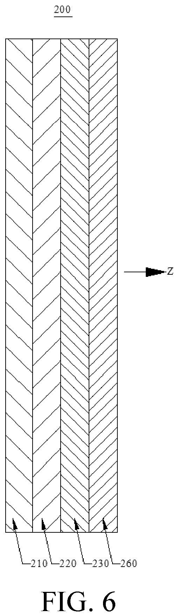

Refer to FIG. 6, where FIG. 6 is a schematic structural view of a first infrared barrier layer 200 in the laminated window glass 1000 in FIG. 2 in a fourth example.

Unlike the first infrared barrier layer 200 in the first example, the first infrared barrier layer 200 in this example further includes an outermost high-refractive-index layer 260. The outermost high-refractive-index layer 260 is disposed on a surface of the first low-refractive-index layer 230 away from the first absorption layer 220. The outermost high-refractive-index layer 260 is farther away from the fourth surface 132 than the first low-refractive-index layer 230, i.e., the outermost high-refractive-index layer 260 is a farthest layer of the first infrared barrier layer 200 away from the fourth surface 132.

By providing the outermost high-refractive-index layer 260, the inner-side visible-light reflectivity of the laminated window glass 1000 for light at certain angles in the vehicle can be further reduced, which is more conducive to avoiding visual interference brought by specular reflection of people and objects in the vehicle. The first infrared barrier layer 200 in the fourth example includes a TCO layer 210, a first absorption layer 220, a first low-refractive-index layer 230, and an outermost high-refractive-index layer 260 laminated in sequence on the fourth surface 132. The thickness of the first low-refractive-index layer 230 is larger than a thickness of the outermost high-refractive-index layer 260. It may be understood that the outermost high-refractive-index layer 260 may also be additionally provided in the first infrared barrier layer 200 in other examples. Specifically, for example, the first infrared barrier layer 200 includes a lower high-refractive-index layer 251, a lower low-refractive-index layer 252, a TCO layer 210, a first absorption layer 220, a first low-refractive-index layer 230, and an outermost high-refractive-index layer 260 laminated in sequence on the fourth surface 132. For another example, the first infrared barrier layer 200 includes a lower high-refractive-index layer 251, a lower low-refractive-index layer 252, a TCO layer 210, a first absorption layer 220, a first low-refractive-index layer 230, a second absorption layer 221, a second low-refractive-index layer 240, and an outermost high-refractive-index layer 260 laminated in sequence on the fourth surface 132. In this case, the thickness of the second low-refractive-index layer 240 is larger than the thickness of the outermost high-refractive-index layer 260.

The outermost high-refractive-index layer 260 has a refractive index greater than or equal to 1.9. In some specific embodiments, the outermost high-refractive-index layer 260 is made of a group consisting of a nitride, an oxide, and a nitrogen oxide of at least one of Zn, Sn, Ti, Si, Al, Ni, Cr, Nb, Mg, Zr, Ga, Y, In, Sb, V, or Ta. In some embodiments, the thickness of the outermost high-refractive-index layer 260 ranges from 5 nm to 50 nm, and in other embodiments, the thickness ranges from 10 nm to 30 nm.

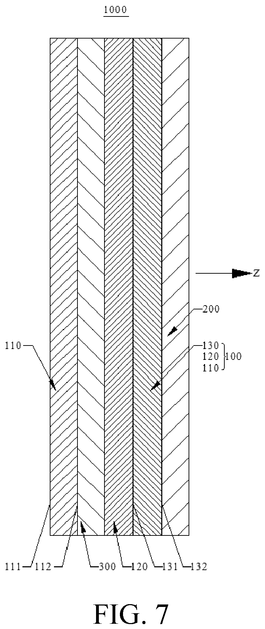

Refer to FIG. 7, where FIG. 7 is a schematic cross-sectional structural view of laminated window glass in a second embodiment of the present disclosure, taken in a thickness direction.

The laminated window glass 1000 includes laminated glass 100, a first infrared barrier layer 200, and a second infrared barrier layer 300. Unlike the laminated window glass 1000 in the first embodiment, the second infrared barrier layer 300 is disposed on a second surface 112 of the laminated glass 100.

The second infrared barrier layer 300 is capable of reflecting infrared rays and thus has a heat insulation effect and a sun protection effect. With the aid of the cooperation of the second infrared barrier layer 300 and the first infrared barrier layer 200, the laminated window glass 1000 can have a better heat insulation effect and a lower total solar energy transmittance *Tts.* The total solar energy transmittance *Tts* is preferably less than or equal to 20%, more preferably less than or equal to 16%, or even less than or equal to 13%, so as to greatly improve thermal comfort in the vehicle. It may be understood that in other embodiments, the second infrared barrier layer 300 may be disposed on the third surface 131 of the laminated glass 100, i.e., the laminated window glass 1000 includes outer glass 110/adhesive layer 120/second infrared barrier layer 300/inner glass 130/first infrared barrier layer 200. Optionally, the second infrared barrier layer 300 is disposed on the adhesive layer 120, i.e., the laminated window glass 1000 includes outer glass 110/adhesive layer 120/second infrared barrier layer 300/inner glass 130/first infrared barrier layer 200, or the laminated window glass 1000 includes outer glass 110/second infrared barrier layer 300/adhesive layer 120/inner glass 130/first infrared barrier layer 200. Optionally, the second infrared barrier layer 300 is disposed in the adhesive layer 120, i.e., the laminated window glass 1000 includes outer glass 110/adhesive layer 120/second infrared barrier layer 300/adhesive layer 120/inner glass 130/first infrared barrier layer 200.

A visible-light transmittance of the outer glass 110 is greater than or equal to 70%, preferably greater than or equal to 80%. Specifically, the outer glass 110 may be made of transparent glass (ordinary clear glass), an ultra-transparent glass (ultra-clear glass), etc. In this embodiment, the second infrared barrier layer 300 is disposed between the outer glass 110 and the inner glass 130, and use of transparent glass or an ultra-transparent glass as the outer glass 110 facilitates infrared rays as much as possible to reach the second infrared barrier layer 300 and to be reflected by the second infrared barrier layer 300, and facilitates infrared rays as little as possible to be absorbed by the outer glass 110, thereby avoiding secondary radiation generated by absorption of excessive heat by the laminated window glass 1000.

The second infrared barrier layer 300 includes at least one metal layer and at least two dielectric layers. Each of the at least one metal layer is disposed between two adjacent dielectric layers of the at least two dielectric layers. The second infrared barrier layer 300 may include one metal layer, or may include two metal layers, three metal layers, four metal layers, or even more metal layers. In the present disclosure, "multiple" or "plurality of" refers to two or more. The dielectric layer, on the one hand, can protect the metal layer from oxidation, and on the other hand, the dielectric layer can adjust optical performance, mechanical performance, and reflective color of the second infrared barrier layer 300.

In some specific embodiments, the metal layer may be made of a group consisting of a metal or metal alloy of at least one of argentum (Ag), aurum (Au), cuprum (Cu), Al, or platinum (Pt). For example, the second infrared barrier layer 300 may include one silver layer, two silver layers, three silver layers, or four silver layers.

In some specific embodiments, the second infrared barrier layer 300 further includes at least one NiCr absorption layer, and each of the at least one NiCr absorption layer has a thickness greater than or equal to 3 nm.

In some specific embodiments, the dielectric layer may be made of a group consisting of at least one of a nitride, an oxide, and a nitrogen oxide of group A elements. The group A elements include at least one of Zn, Sn, Ti, Si, Al, Ni, Cr, Nb, Mg, Zr, Ga, Y, In, Sb, V, or Ta. For example, the dielectric layer may be ZnSnOₓ, TiOₓ, AZO, SiNₓ, etc.

### Examples

Some examples of the present disclosure are given below for further illustration, but the present disclosure is not limited to the following examples.

For ease of understanding, terms involved in the examples of the present disclosure are first explained.

A value of *x* in chemical formulae ZnSnOₓ, SiNₓ, SiOₓ, and the like may be determined according to stoichiometry, sub-stoichiometry, or super-stoichiometry in a magnetron sputtering process.

Thickness: a physical thickness.

Refractive index: a refractive index of transmittance light with a wavelength of 550 nm.

Incident angle: an angle between light incident on laminated window glass and a face normal at a position of incidence.

Measurement from inner glass: light incident on the laminated window glass 1000 is measured from the inner glass, which is equivalent to light incident on the laminated window glass 1000 being measured from the inside of the vehicle after the laminated window glass 1000 is mounted on the vehicle.

### Examples 1 to 2 and comparative examples 1 to 3

Each laminated window glass 1000 in examples 1 to 2 and comparative examples 1 to 3 includes laminated glass 100. The laminated glass 100 includes outer glass 110, an adhesive layer 120, and inner glass 130. The outer glass 110 is transparent glass with the thickness of 2.1 mm (visible-light transmittance ≥80%), the adhesive layer 120 is transparent PVB with the thickness of 0.76 mm (visible-light transmittance ≥80%), and the inner glass 130 is gray glass with the thickness of 2.1 mm (visible-light transmittance ≤30%).

### Example 1

The laminated window glass 1000 includes a first infrared barrier layer 200 and does not include any second infrared barrier layer 300. The first infrared barrier layer 200includes ZnSnOₓ (26 nm)/ITO (109.4 nm)/NiCr (5 nm)/SiOₓ (68.1 nm)/NiCr (5.4 nm)/SiOₓ (36.3 nm)/SiNₓ (21 nm) laminated in sequence on the fourth surface 132, where descriptions in parentheses herein and hereinafter refer to the thickness. The first infrared barrier layer 200 in example 1 specifically includes a TCO layer (ZnSnOₓ/ITO), a first absorption layer (NiCr), a first low-refractive-index layer (SiOₓ), a second absorption layer (NiCr), a second low-refractive-index layer (SiOₓ), and an outermost high-refractive-index layer (SiNₓ).

### Example 2

The laminated window glass 1000 includes a first infrared barrier layer 200 and does not include any second infrared barrier layer 300. The first infrared barrier layer 200 includes SiZrNₓ (32.1 nm)/SiOₓ (35.8 nm)/ITO (80.2 nm)/NiCr (7.1 nm)/SiOₓ (44.3 nm)/SiZrNₓ (20.6 nm) laminated in sequence on the fourth surface 132. The first infrared barrier layer 200 in example 2 specifically includes a lower high-refractive-index layer (SiZrNₓ), a lower low-refractive-index layer (SiOₓ), a TCO layer (ITO), a first absorption layer (NiCr), a first low-refractive-index layer (SiOₓ), and an outermost high-refractive-index layer (SiNₓ).

### Comparative example 1

The laminated window glass 1000 does not include any first infrared barrier layer 200 and any second infrared barrier layer 300.

### Comparative example 2

The laminated window glass 1000 includes a second infrared barrier layer 300 and does not include any first infrared barrier layer 200. The second infrared barrier layer 300 includes ZnSnOₓ (26.5 nm)/AZO (12.3 nm)/Ag (12 nm)/NiCr (3.3 nm)/AZO (10 nm)/ZnSnOₓ (69.3 nm)/AZO (9.9 nm)/Ag (10.6 nm)/NiCr (4.5 nm)/AZO (9.6 nm)/ZnSnOₓ (50.4 nm)/AZO (10 nm)/Ag (11 nm)/AZO (9.9 nm)/ZnSnOₓ (19.7 nm)/SiNₓ (14.6 nm) laminated in sequence on the second surface 112. The second infrared barrier layer 300 includes three silver layers.

### Comparative example 3

The laminated window glass 1000 includes a first infrared barrier layer 200 and does not include any second infrared barrier layer 300. The first infrared barrier layer 200 includes Nb₂O₅ (29 nm)/SiOₓ (31.2 nm)/ITO (215.3 nm)/SiOₓ (72.9 nm)/NiCr (8.3 nm)/SiOₓ (53.4 nm)/SiNₓ (19.5 nm) laminated in sequence on the fourth surface 132. Unlike the first infrared barrier layers 200 in examples 1 to 2, in the first infrared barrier layer 200 in comparative example 3, the TCO layer 210 is not in direct contact with the first absorption layer 220, and a SiOₓ layer with a thickness of 72.9 nm is further disposed between the TCO layer 210 and the first absorption layer 220.

The outer glass 110, the adhesive layer 120, and the inner glass 130 in each of examples 1 to 2 and comparative examples 1 to 3 are prepared, a corresponding first infrared barrier layer 200 is deposited on the fourth surface 132 of the inner glass 130 by a magnetron sputtering process, and then the laminated window glass 1000 in each of examples 1 to 2 and comparative examples 1 to 3 is obtained through processing and manufacturing in accordance with a vehicle glass production process.

Measurement is performed to calculate a visible-light transmittance *TL,* a total solar energy transmittance *Tts,* an emissivity e, and an inner-side visible-light reflectivity *RLint* of the laminated window glass 1000 in each of examples 1 to 2 and comparative examples 1 to 3.

Visible-light transmittance *TL:* measured and calculated according to the standard international standard organization (ISO) 9050.

Total solar transmittance *Tts:* measured and calculated according to the standard ISO 9050.

Emissivity e: measured from inner glass with a Fourier infrared spectrometer, and calculated and calibrated according to the standard European Norm (EN) 12898.

Inner-side visible-light reflectivity *RLint:* measured from inner glass, and a reflectivity of the laminated window glass 1000 for visible light incident at 0°, 20°, 40°, 60°, and 70° respectively is calculated according to the standard ISO 9050.

Measurement results in examples 1 to 2 and comparative examples 1 to 3 are recorded in Table 1.

**Table 1: measurements results in examples 1 to 2 and comparative examples 1 to 3**

| | | Example 1 | Example 2 | Comparative example 1 | Comparative example 2 | Comparative example 3 |
|---|---|---|---|---|---|---|
| Laminated glass | Transparent glass with the thickness of 2.1 mm/transparent PVB with the thickness of 0.76 mm/gray glass with the thickness of 2.1 mm | | | | | |
| First infrared barrier layer | | Include | Include | / | / | Include |
| Second infrared barrier layer | | / | / | / | Include | / |
| Visible-light transmittance *TL* | | 7.03% | 14.65% | 27.82% | 11.40% | 9.46% |
| Total solar transmittance *Tts* | | 20.65% | 28.01% | 41.50% | 20.00% | 21.19% |
| Emissivity e | | 0.22 | 0.45 | 0.9 | 0.9 | 0.17 |
| Inner-side visible-light reflectivity *rlint* | Incident angle = 0° | 2.16% | 2.12% | 5.01% | 5.98% | 6.62% |
| | Incident angle = 20° | 1.90% | 1.71% | 5.01% | 5.93% | 5.74% |
| | Incident angle = 40° | 1.72% | 1.49% | 5.55% | 5.90% | 4.19% |
| | Incident angle = 60° | 5.45% | 5.75% | 10.05% | 10.40% | 6.59% |
| | Incident angle = 70° | 13.92% | 14.73% | 18.42% | 18.50% | 14.12% |

As can be seen from Table 1, the laminated window glass 1000 provided in comparative example 1 does not include the first infrared barrier layer 200 and the second infrared barrier layer 300, the visible-light transmittance *TL* of the laminated window glass 1000 is greater than 25%, the total solar energy transmittance *Tts* of the laminated window glass 1000 is greater than 40%, the emissivity e is greater than 0.5, and the inner-side visible-light reflectivity *RLint* of the laminated window glass 1000 is greater than 4%, greater than 4%, greater than 4%, greater than 8%, and greater than 16% when the incident angle is 0°, 20°, 40°, 60°, and 70°, respectively. It can be seen that the laminated window glass 1000 provided in comparative example 1 cannot meet comprehensive requirements such as a good heat insulation effect, a low radiation effect, a low visible-light transmittance, a relatively low visible-light reflectivity for light in the vehicle incident at an incident angle ranging from 0° to 70°, and so on.

The laminated window glass 1000 provided in comparative example 2 includes only the second infrared barrier layer 300 but does not include the first infrared barrier layer 200, the emissivity e of the laminated window glass 1000 is greater than 0.5, and the inner-side visible-light reflectivity *RLint* of the laminated window glass 1000 is greater than 4%, greater than 4%, greater than 4%, greater than 8%, and greater than 16% when the incident angle is 0°, 20°, 40°, 60°, and 70°, respectively. It can be seen that the laminated window glass 1000 provided in comparative example 2 cannot meet the comprehensive requirements such as a good low radiation effect and a relatively low visible-light reflectivity for light in the vehicle incident at an incident angle ranging from 0° to 70°, and so on.

The laminated window glass 1000 provided in comparative example 3 includes the first infrared barrier layer 200, but the TCO layer 210 is not in direct contact with the first absorption layer 220, so that the inner-side visible-light reflectivity *RLint* of the laminated window glass 1000 is always greater than 4% when the incident angle is 0°, 20°, and 40°. It can be seen that the laminated window glass 1000 provided in comparative example 3 cannot meet the requirements such as a relatively low visible-light reflectivity for light in the vehicle incident at an incident angle ranging from 0° to 40°.

The laminated window glass 1000 provided in example 1 includes the first infrared barrier layer 200 and thus has a visible-light transmittance *TL* satisfying TL ≤ 10%, a total solar energy transmittance *Tts* satisfying *Tts* ≤ 25%, an emissivity e satisfying *e*≤ 0.25, and an inner-side visible-light reflectivity *RLint* satisfying *RLint* ≤ 3%, ≤ 2%, ≤ 2%, ≤ 6%, and ≤ 15% when the incident angle is 0°, 20°, 40°, 60°, and 70°, respectively. It can be seen that the laminated window glass 1000 provided in example 1 can meet the comprehensive requirements such as a good heat insulation effect, a good low radiation effect, a low visible-light transmittance, and a relatively low reflectivity for light in the vehicle incident at an incident angle ranging from 0° to 70°, and so on.

The laminated window glass 1000 provided in example 2 includes the first infrared barrier layer 200 having a visible-light transmittance *TL* satisfying *TL*≤ 15%, a total solar energy transmittance *Tts* satisfying *Tts*≤ 30%, an emissivity e satisfying 0.35≤*e* ≤0.5, and an inner-side visible-light reflectivity *RLint* satisfying *RLint*≤ *3%,* ≤ 2%, ≤ 2%, ≤ 6%, and ≤ 15% when the incident angle is 0°, 20°, 40°, 60°, and 70°, respectively. It can be seen that the laminated window glass 1000 provided in example 2 can meet the comprehensive requirements such as a good heat insulation effect, a good low radiation effect, a low visible-light transmittance, and a relatively low visible-light reflectivity for light in the vehicle incident at an incident angle ranging from 0° to 70°, and so on.

A difference between the visible-light transmittance of the laminated window glass 1000 with the first infrared barrier layer 200 provided in each of examples 1 to 2 and the visible-light transmittance of the laminated window glass 1000 without the first infrared barrier layer 200 provided in comparative example 1 is greater than or equal to 10%, or even greater than or equal to 20%. Arrangement of the first infrared barrier layer 200 of the present disclosure can substantially reduce the visible-light transmittance of the laminated window glass 1000, so that it is unnecessary to use more expensive dark-colored PVB, thereby reducing production costs.

### Examples 3 to 7

The laminated window glass 1000 in each of examples 3 to 7 includes laminated glass 100, a first infrared barrier layer 200, and a second infrared barrier layer 300. The laminated glass 100 includes outer glass 110, an adhesive layer 120, and inner glass 130. The outer glass 110 is transparent glass with the thickness of 2.1 mm (visible-light transmittance ≥80%), the adhesive layer 120 is transparent PVB with the thickness of 0.76 mm (visible-light transmittance ≥80%), and the inner glass 130 is gray glass with the thickness of 2.1 mm (visible-light transmittance ≤30%). The first infrared barrier layer 200 is disposed on a fourth surface 132 of the inner glass 130, and the second infrared barrier layer 300 is disposed on a second surface 112 of the outer glass 110.

### Example 3

The first infrared barrier layer 200 includes Nb₂O₅ (29 nm)/SiOₓ (31.2 nm)/ITO (215.3 nm)/NiCr (5.8 nm)/SiOₓ (53.4 nm)/SiNₓ (19.5 nm) laminated in sequence on the fourth surface 132. The second infrared barrier layer 300 includes ZnSnOₓ (25.3 nm)/AZO (12.3 nm)/Ag (10.8 nm)/AZO (10 nm)/ZnSnOₓ (23.5 nm)/SiNₓ (14.6 nm) laminated in sequence on the second surface 112. The second infrared barrier layer 300 includes one silver layer.

### Example 4

The first infrared barrier layer 200 includes TiOₓ (34.7 nm)/SiOₓ (31.2 nm)/ITO (226.7 nm)/NiCr (6.4 nm)/SiOₓ (52.7 nm)/SiNₓ (18.9 nm) laminated in sequence on the fourth surface 132. The second infrared barrier layer 300 includes ZnSnOₓ (25.3 nm)/AZO (12.3 nm)/Ag (12.3 nm)/AZO (10 nm)/ZnSnOₓ (63.5 nm)/AZO (9.9 nm)/Ag (13.1 nm)/AZO (9.7 nm)/ZnSnOₓ (23.5 nm)/SiNₓ (14.6 nm) laminated in sequence on the second surface 112. The second infrared barrier layer 300 includes two silver layers.

### Example 5

The first infrared barrier layer 200 includes TiO₂ (29 nm)/SiOₓ (28.6 nm)/ITO (218.5 nm)/NiCr (5.8 nm)/SiOₓ (46.6 nm)/SiZrAlNₓ (19.7 nm) laminated in sequence on the fourth surface 132. The second infrared barrier layer 300 includes ZnSnOₓ (25.3 nm)/AZO (12.3 nm)/Ag (12.3 nm)/AZO (10 nm)/ZnSnOₓ (63.5 nm)/AZO (9.9 nm)/Ag (14.5 nm)/AZO (9.7 nm)/ZnSnOₓ (53.4 nm)/AZO (9.3 nm)/Ag (12.6 nm)/AZO (9.7 nm)/ZnSnOₓ (23.5 nm)/SiNₓ (14.6 nm) laminated in sequence on the second surface 112. The second infrared barrier layer 300 includes three silver layers.

### Example 6

The first infrared barrier layer 200 includes Nb₂O₅ (29 nm)/SiOₓ (31.2 nm)/ITO (215.3 nm)/NiCr (5.8 nm)/SiOₓ (53.4 nm)/SiNₓ (19.5 nm) laminated in sequence on the fourth surface 132. The second infrared barrier layer 300 includes ZnSnOₓ (25.3 nm)/AZO (12.3 nm)/Ag (14.2 nm)/AZO (10 nm)/ZnSnOₓ (62.2 nm)/AZO (9.9 nm)/Ag (13.7 nm)/AZO (9.8 nm)/ZnSnOₓ (58.4 nm)/AZO (9.8 nm)/Ag (12.5 nm)/AZO (9.7 nm)/ZnSnOₓ (23.5 nm)/SiNₓ (14.6 nm) laminated in sequence on the second surface 112. The second infrared barrier layer 300 includes three silver layers.

### Example 7

The first infrared barrier layer 200 includes ZnSnOₓ (26 nm)/ITO (109.4 nm)/NiCr (5 nm)/SiOₓ (68.1 nm)/NiCr (5.4 nm)/SiOₓ (36.3 nm)/SiNₓ (21 nm) laminated in sequence on the fourth surface 132. The second infrared barrier layer 300 includes ZnSnOₓ (25.3 nm)/AZO (12.3 nm)/Ag (13.2 nm)/AZO (10 nm)/ZnSnOₓ (63 nm)/AZO (9.9 nm)/Ag (13.7 nm)/AZO (9.7 nm)/ZnSnOₓ (56.4 nm)/AZO (9.3 nm)/Ag (12.8 nm)/AZO (9.3 nm)/ZnSnOₓ (23 nm)/SiNₓ (11.9 nm) laminated in sequence on the second surface 112. The second infrared barrier layer 300 includes three silver layers.

The outer glass 110, the adhesive layer 120, and the inner glass 130 in each of examples 3 to 7 are prepared, a corresponding first infrared barrier layer 200 is deposited on the fourth surface 132 of the inner glass 130 by a magnetron sputtering process, a corresponding second infrared barrier layer 300 is deposited on the second surface 112 of the outer glass 110 by a magnetron sputtering process, and then the laminated window glass 1000 in each of examples 3 to 7 are obtained through processing and manufacturing in accordance with a vehicle glass production process.

Measurement is performed to calculate a visible-light transmittance *TL,* a total solar energy transmittance *Tts,* an emissivity e, an inner-side visible-light reflectivity *RLint,* and a transmittance index A of the laminated window glass 1000 in each of examples 3 to 7, as well as a visible-light transmittance *TL1* of the inner glass 130 in which the first infrared barrier layer 200 is deposited.

Visible-light transmittance *TL:* a visible-light transmittance of the laminated window glass 1000 measured and calculated according to the standard ISO 9050.

Visible-light transmittance *TL1*: a total visible-light transmittance of the inner glass 130 and the first infrared barrier layer 200 measured and calculated according to the standard ISO 9050.

Solar direct transmittance *TE:* a solar direct transmittance of the laminated window glass 1000 measured and calculated according to the standard ISO 9050.

Transmission index *A:* calculated according to a formula *A*=*TL*/(*TE***TL1*).

Total solar transmittance *Tts:* a total solar transmittance of the laminated window glass 1000 measured and calculated according to the standard ISO 9050.

Emissivity e: measured from inner glass with a Fourier infrared spectrometer, and calculated and calibrated according to the standard EN 12898.

Inner-side visible-light reflectivity *RLint:* measured from inner glass, and a reflectivity of the laminated window glass 1000 for visible light incident at 0°, 20°, 40°, 60°, and 70° respectively is calculated according to the standard ISO 9050.

Measurement results in examples 3 to 7 are recorded in Table 2.

**Table 2: measurement results in examples 3 to 7**

| | | Example 3 | Example 4 | Example 5 | Example 6 | Example 7 |
|---|---|---|---|---|---|---|
| Laminated glass | | Transparent glass with the thickness of 2.1 mm/transparent PVB with the thickness of 0.76 mm/gray glass with the thickness of 2.1 mm | | | | |
| First infrared barrier layer | | Include | Include | Include | Include | Include |
| Second infrared barrier layer | | Include | Include | Include | Include | Include |
| Visible-light transmittance *TL* | | 11.88% | 10.65% | 10.36% | 10.63% | 5.72% |
| Visible-light transmittance *TL1* | | 13.44% | 12.12% | 13.19% | 13.44% | 7.23% |
| Solar direct transmittance *TE* | | 7.5% | 4.67% | 4.05% | 4.53% | 2.49% |
| Transmission index A | | 11.79 | 18.82 | 19.39 | 17.46 | 31.77 |
| Total solar transmittance *Tts* | | 18.35% | 13.22% | 12.14% | 12.50% | 11.36% |
| Emissivity e | | 0.17 | 0.16 | 0.17 | 0.17 | 0.22 |
| Inner-side visible-light reflectivity *rlint* | Incident angle = 0° | 2.68% | 3.44% | 3.38% | 2.69% | 2.20% |
| | Incident angle = 20° | 2.41% | 2.81% | 2.71% | 2.42% | 1.93% |
| | Incident angle = 40° | 2.51% | 2.33% | 2.13% | 2.50% | 1.75% |
| | Incident angle = 60° | 6.57% | 6.44% | 6.10% | 6.55% | 5.47% |
| | Incident angle = 70° | 14.79% | 14.97% | 14.71% | 14.76% | 13.93% |

As can be seen from Table 2, the laminated window glass 1000 provided in each of examples 3 to 7 includes the first infrared barrier layer 200 and the second infrared barrier layer 300 and thus has a visible-light transmittance *TL* satisfying *TL*≤12% or even ≤6%, a total solar energy transmittance *Tts* satisfying *Tts*≤20% or even ≤15%, an emissivity e satisfying *e*≤0.25 or even ≤0.20, and an inner-side visible-light reflectivity *RLint* satisfying *RLint*≤4%, ≤3%, ≤3%, ≤6%, and ≤15% when the incident angle is 0°, 20°, 40°, 60°, and 70°, respectively. It can be seen that the laminated window glass 1000 provided in each of examples 3 to 7 can meet the comprehensive requirements such as a good heat insulation effect, a good low radiation effect, a low visible-light transmittance, and a relatively low visible-light reflectivity for light in the vehicle incident at an incident angle ranging from 0° to 70°, and so on.

Compared with the laminated window glass 1000 including only one silver layer in example 3, the total solar transmittance *Tts* of the laminated window glass 1000 including two silver layers or three silver layers provided in each of examples 4 to 7 is significantly reduced to satisfy *Tts*≤ 15% or even ≤ 13%, so that the laminated window glass 1000 in each of examples 4 to 7 has a better heat insulation effect.

The laminated window glass 1000 provided in each of examples 3 to 7 includes the first infrared barrier layer 200 and the second infrared barrier layer 300 and has a transmission index A greater than 8, so that the laminated window glass 1000 can meet the comprehensive requirements such as a good heat insulation effect, a low visible-light transmittance, and a relatively low visible-light reflectivity for light in the vehicle incident at an incident angle ranging from 0° to 70°, and so on. Preferably, the transmission index A of the laminated window glass 1000 is greater than or equal to 10, more preferably greater than or equal to 15, further preferably greater than or equal to 20, or even greater than or equal to 30.

### Examples 8 to 11

The laminated window glass 1000 in each of examples 8 to 11 includes laminated glass 100, a first infrared barrier layer 200, and a second infrared barrier layer 300. The laminated glass 100 includes outer glass 110, an adhesive layer 120, and inner glass 130. The outer glass 110 is transparent glass with the thickness of 2.1 mm (visible-light transmittance ≥80%), the adhesive layer 120 is transparent PVB with the thickness of 0.76 mm (visible-light transmittance ≥80%), and the inner glass 130 is gray glass with the thickness of 2.1 mm (visible-light transmittance ≤30%). The first infrared barrier layer 200 is disposed on a fourth surface 132 of the inner glass 130, and the second infrared barrier layer 300 is disposed on a second surface 112 of the outer glass 110.

### Example 8

The first infrared barrier layer 200 includes TiOₓ (51.1 nm)/SiOₓ (30.3 nm)/ITO (70.2 nm)/NiCr (7.3 nm)/SiOₓ (108.8 nm) laminated in sequence on the fourth surface 132. The second infrared barrier layer 300 includes ZnSnOₓ (30 nm)/AZO (10 nm)/Ag (12 nm)/AZO (11 nm)/ZnSnOₓ (61.3 nm)/AZO (9.9 nm)/Ag (12.6 nm)/AZO (9.6 nm)/ZnSnOₓ (57.4 nm)/AZO (9.7 nm)/Ag (11 nm)/AZO (9.7 nm)/ZnSnOₓ (23.5 nm)/SiNₓ (14.6 nm) laminated in sequence on the second surface 112. The second infrared barrier layer 300 includes three silver layers.

### Example 9

The first infrared barrier layer 200 includes SiZrNₓ (32.1 nm)/SiOₓ (35.8 nm)/ITO (80.2 nm)/NiCr (7.1 nm)/SiOₓ (44.3 nm)/SiZrNₓ (20.6 nm) laminated in sequence on the fourth surface 132. The second infrared barrier layer 300 includes ZnSnOₓ (25.3 nm)/AZO (12.3nm)/Ag (12.3nm)/AZO (10 nm)/ZnSnOₓ (63.5 nm)/AZO (9.9 nm)/Ag (14.5 nm)/AZO (9.7nm)/ZnSnOₓ (53.5 nm)/AZO (9.3 nm)/Ag (12.6 nm)/AZO (9.7 nm)/ZnSnOₓ (23.5 nm)/SiNₓ (14.6 nm) laminated in sequence on the second surface 112. The second infrared barrier layer 300 includes three silver layers.

### Example 10

The first infrared barrier layer 200 includes ZnSnOₓ (161.8 nm)/NiCr (6.4 nm)/SiOₓ (48.9 nm)/SiNₓ (18.5 nm) laminated in sequence on the fourth surface 132. The second infrared barrier layer 300 includes ZnSnOₓ (26.5 nm)/AZO (12.3 nm)/Ag (12 nm)/NiCr (3.3 nm)/AZO (10 nm)/ZnSnOₓ (69.3 nm)/AZO (9.9 nm)/Ag (10.6 nm)/NiCr (4.5 nm)/AZO (9.6 nm)/ZnSnOₓ (50.4 nm)/AZO (10 nm)/Ag (11 nm)/AZO (9.9 nm)/ZnSnOₓ (19.7 nm)/SiNₓ (14.6 nm) laminated in sequence on the second surface 112. The second infrared barrier layer 300 includes three silver layers.

### Example 11

The first infrared barrier layer 200 includes HAZO (148.9 nm)/NiCr (4.9 nm)/SiOₓ (48.9 nm)/SiNₓ (18.5 nm) laminated in sequence on the fourth surface 132. The second infrared barrier layer 300 includes ZnSnOₓ (26.5 nm)/AZO (12.3 nm)/Ag (12.8 nm)/NiCr (3.9 nm)/AZO (11.2 nm)/ZnSnOₓ (66.2 nm)/AZO (9.9 nm)/Ag (12.4 nm)/NiCr (4.5 nm)/AZO (9.9 nm)/ZnSnOₓ (22.1 nm)/SiNₓ (14.6 nm) laminated in sequence on the second surface 112. The second infrared barrier layer 300 includes two silver layers.

The outer glass 110, the adhesive layer 120, and the inner glass 130 in each of examples 8 to 11 are prepared, a corresponding first infrared barrier layer 200 is deposited on the fourth surface 132 of the inner glass 130 by a magnetron sputtering process, a corresponding second infrared barrier layer 300 is deposited on the second surface 112 of the outer glass 110 by a magnetron sputtering process, and then the laminated window glass 1000 in each of examples 8 to 11 is obtained through processing and manufacturing in accordance with a vehicle glass production process.

Measurement is performed to calculate a visible-light transmittance *TL,* a total solar energy transmittance *Tts,* an emissivity e, an inner-side visible-light reflectivity *RLint,* and a transmittance index A of the laminated window glass 1000 in each of examples 3 to 7, as well as a visible-light transmittance *TL1* of the inner glass 130 in which the first infrared barrier layer 200 is deposited.

Visible-light transmittance *TL:* a visible-light transmittance of the laminated window glass 1000 measured and calculated according to the standard ISO 9050.

Visible-light transmittance *TL1*: a total visible-light transmittance of the inner glass 130 and the first infrared barrier layer 200 measured and calculated according to the standard ISO 9050.

Solar direct transmittance *TE:* a solar direct transmittance of the laminated window glass 1000 measured and calculated according to the standard ISO 9050.

Transmission index *A:* calculated according to a formula *A*=*TL*/(*TE***TL1*).

Total solar transmittance *Tts:* a total solar transmittance of the laminated window glass 1000 measured and calculated according to the standard ISO 9050.

Emissivity e: measured from inner glass with a Fourier infrared spectrometer, and calculated and calibrated according to the standard EN 12898.

Inner-side visible-light reflectivity *RLint:* measured from inner glass, and a reflectivity of the laminated window glass 1000 for visible light incident at 0°, 20°, 40°, 60°, and 70° respectively is calculated according to the standard ISO 9050.

Measurement results in examples 8 to 11 are recorded in Table 3.

**Table 3: measurement results in examples 8 to 11**

| | | Example 8 | Example 9 | Example 10 | Example 11 |
|---|---|---|---|---|---|
| Laminated glass | | Transparent glass with the thickness of 2.1 mm/transparent PVB with the thickness of 0.76 mm/gray glass with the thickness of 2.1 mm | | | |
| First infrared barrier layer | | Include | Include | Include | Include |
| Second infrared barrier layer | | Include | Include | Include | Include |
| Visible-light transmittance *TL* | | 10.19% | 11.86% | 6.71% | 8.18% |
| Visible-light transmittance *TL1* | | 11.79% | 15.08% | 19.59% | 19.31% |
| Solar direct transmittance *TE* | | 4.34% | 4.88% | 2.96% | 3.55% |
| Transmission index A | | 19.91 | 16.12 | 11.57 | 11.93 |
| Total solar transmittance *Tts* | | 15.56% | 14.93% | 14.16% | 14.24% |
| Emissivity e | | 0.47 | 0.45 | 0.41 | 0.36 |
| Inner-side visible-light reflectivity *rlint* | Incident angle = 0° | 3.32% | 2.29% | 1.07% | 0.57% |
| | Incident angle = 20° | 2.73% | 1.86% | 0.97% | 0.50% |
| | Incident angle = 40° | 2.02% | 1.60% | 1.34% | 0.94% |
| | Incident angle = 60° | 5.02% | 5.81% | 5.86% | 5.47% |
| | Incident angle = 70° | 12.65% | 14.76% | 14.67% | 14.27% |

As can be seen from Table 3, the laminated window glass 1000 provided in each of examples 8 to 11 includes the first infrared barrier layer 200 and the second infrared barrier layer 300 and thus has a visible-light transmittance *TL* satisfying *TL* ≤ 12%, a total solar energy transmittance *Tts* satisfying *Tts* ≤ 16%, an emissivity e satisfying 0.35≤*e*≤0.5, and an inner-side visible-light reflectivity *RLint* satisfying *RLint* ≤ 4%, ≤ 3%, ≤ 3%, ≤ 6%, and ≤ 15% when the incident angle is 0°, 20°, 40°, 60°, and 70°, respectively. It can be seen that the laminated window glass 1000 provided in each of examples 8 to 11 can meet the comprehensive requirements such as a good heat insulation effect, a good low radiation effect, a low visible-light transmittance, and a relatively low visible-light reflectivity for light in the vehicle incident at an incident angle ranging from 0° to 70°, and so on.

Compared with examples 8 to 9, two NiCr absorption layers are additionally provided in the second infrared barrier layer 300 of the laminated window glass 1000 provided in each of examples 10 to 11. Therefore, the laminated window glass 1000 provided in each of examples 10 to 11 has a reduced visible-light transmittance and a reduced visible-light reflectivity for light in the vehicle incident at an incident angle ranging from 0° to 40°. Furthermore, the laminated window glass 1000 provided in each of examples 10 to 11 has the visible-light transmittance *TL* satisfying TL ≤ 10% and the inner-side visible-light reflectivity *RLint* always satisfying *RLint* ≤ 2% or even ≤1% when the incident angle is 0°, 20°, and 40°.

The laminated window glass 1000 provided in each of examples 8 to 11 includes the first infrared barrier layer 200 and the second infrared barrier layer 300 and has a transmission index A greater than 8, so that the laminated window glass 1000 can meet the comprehensive requirements such as a good heat insulation effect, a low visible-light transmittance, and a relatively low visible-light reflectivity for light in the vehicle incident at an incident angle ranging from 0° to 70°, and so on. Preferably, the transmission index A of the laminated window glass 1000 is greater than or equal to 10, more preferably greater than or equal to 15.

The above content specifically describes the laminated window glass of the present disclosure, but the present disclosure is not limited by the content of the specific embodiments described above, so that any improvements, equivalent modifications, and replacements, etc. based on the technical points of the present disclosure are within the scope of protection of the present disclosure.

## Claims

1. Laminated window glass, comprising outer glass, an adhesive layer, inner glass, and a first infrared barrier layer, wherein the outer glass has a first surface and a second surface opposite to the first surface, the inner glass has a third surface and a fourth surface opposite to the third surface, the adhesive layer is disposed between the second surface and the third surface, and the first infrared barrier layer is disposed on the fourth surface, wherein
an inner-side visible-light reflectivity of the laminated window glass is less than or equal to 16% for visible light with an incident angle θ satisfying 60° ≤ θ ≤ 70°.

2. The laminated window glass of claim 1, wherein the inner-side visible-light reflectivity of the laminated window glass is less than or equal to 8% for visible light with the incident angle θ satisfying 40° < θ ≤ 60°.

3. The laminated window glass of claim 1, wherein the inner-side visible-light reflectivity of the laminated window glass is less than or equal to 4% for visible light with the incident angle θ satisfying 0° ≤ θ ≤ 40°.

4. The laminated window glass of claim 1, wherein the laminated window glass has a visible-light transmittance less than or equal to 16%, the outer glass has a visible-light transmittance greater than or equal to 70%, and the inner glass has a visible-light transmittance ranging from 10% to 50%.

5. The laminated window glass of claim 4, wherein the adhesive layer is a thermoplastic polymer layer with a visible-light transmittance greater than or equal to 70%.

6. The laminated window glass of claim 1, wherein the first infrared barrier layer comprises a transparent conductive oxide (TCO) layer, a first absorption layer, and a first low-refractive-index layer laminated in sequence on the fourth surface, and the first low-refractive-index layer has a refractive index less than 1.9.

7. The laminated window glass of claim 6, wherein the TCO layer is made of at least one of indium tin oxide (ITO), nickel chromium oxide (NiCrOₓ), fluorine-doped tin oxide (FTO), zinc tin oxide (ZnSnOₓ), or doped zinc oxide (ZnO), and a doping element in the doped ZnO may be at least one of: aluminum (Al), tungsten (W), hafnium (Hf), gallium (Ga), yttrium (Y), niobium (Nb), or neodymium (Nd).

8. The laminated window glass of claim 6, wherein the first absorption layer is made of at least one of nickel chromium (NiCr), nickel aluminum (NiAl), nickel silicon (NiSi), chromium (Cr), titanium nitrogen (TiN), niobium nitrogen (NbN), or molybdenum titanium (MoTi).

9. The laminated window glass of claim 6, wherein the TCO layer has a thickness ranging from 50 nm to 300 nm, the first absorption layer has a thickness ranging from 2 nm to 30 nm, and the first low-refractive-index layer has a thickness ranging from 10 nm to 300 nm.

10. The laminated window glass of claim 6, wherein the first absorption layer is in direct contact with the TCO layer, and the first low-refractive-index layer is in direct contact with the first absorption layer.

11. The laminated window glass of claim 6, wherein the first infrared barrier layer further comprises a second absorption layer and a second low-refractive-index layer, the second absorption layer is disposed between the first low-refractive-index layer and the second low-refractive-index layer, and the second low-refractive-index layer is disposed farther away from the fourth surface than the first low-refractive-index layer.

12. The laminated window glass of claim 6, wherein the first infrared barrier layer further comprises at least one laminated structure, the at least one laminated structure is disposed between the fourth surface and the TCO layer, each of the at least one laminated structure comprises a lower high-refractive-index layer and a lower low-refractive-index layer, the lower high-refractive-index layer is closer to the fourth surface than the lower low-refractive-index layer, the lower high-refractive-index layer has a refractive index greater than or equal to 1.9, and the lower low-refractive-index layer has a refractive index less than 1.9.

13. The laminated window glass of claim 6 or 11, wherein the first infrared barrier layer further comprises an outermost high-refractive-index layer, the outermost high-refractive-index layer is a farthest layer of the first infrared barrier layer away from the fourth surface, the outermost high-refractive-index layer has a refractive index greater than or equal to 1.9, and the outermost high-refractive-index layer has a thickness ranging from 5 nm to 50 nm.

14. The laminated window glass of claim 13, wherein a thickness of the first low-refractive-index layer or a thickness of the second low-refractive-index layer is larger than the thickness of the outermost high-refractive-index layer.

15. The laminated window glass of claim 1, wherein the laminated window glass has an emissivity that is measured from the inner glass and ranges from 0.35 to 0.5.

16. The laminated window glass of claim 1, wherein the laminated window glass has an emissivity that is measured from the inner glass and is less than 0.35.

17. The laminated window glass of claim 1, further comprising a second infrared barrier layer, wherein the second infrared barrier layer is disposed between the outer glass and the inner glass, the second infrared barrier layer comprises at least one metal layer and at least two dielectric layers, each of the at least one metal layer is disposed between two adjacent dielectric layers of the at least two dielectric layers, and a metal layer is made of a group consisting of a metal or metal alloy of at least one of argentum (Ag), aurum (Au), cuprum (Cu), Al, or platinum (Pt).

18. The laminated window glass of claim 17, wherein the second infrared barrier layer further comprises at least one NiCr absorption layer, and each of the at least one NiCr absorption layer has a thickness greater than or equal to 3 nm.

19. The laminated window glass of claim 17, wherein the laminated window glass has a transmittance index *A* greater than 8, and the transmittance index *A* is calculated according to a formula *A*=*TL*/(*TE***TL1*), wherein *TL* represents a visible-light transmittance of the laminated window glass, *TE* represents a solar direct transmittance of the laminated window glass, and *TL1* represents a total visible-light transmittance of the inner glass and the first infrared barrier layer.

20. The laminated window glass of claim 19, wherein the transmission index A of the laminated window glass is greater than or equal to 10.
